# FASCICULE DE BREVET EUROPEEN

(11) **EP 4 127 437 B1**
(45) Date de publication et mention de la délivrance du brevet: **29.01.2025**
(21) Numéro de dépôt: 21732377.3
(22) Date de dépôt: 25.03.2021
(51) Int. Cl.: F02C 3/107, F01D 25/16, F02C 7/06, F02C 7/36, F16H 1/28

(54) **TURBOMACHINE POUR AÉRONEF**
FLUGZEUGTURBOMASCHINE
AIRCRAFT TURBINE ENGINE

(30) Priorité: 27.03.2020 FR 2003020
(43) Date de publication de la demande: 08.02.2023
(73) Titulaire: SAFRAN AIRCRAFT ENGINES, 75015 Paris (FR)
(72) Inventeur: LEVISSE, Paul, Ghislain, Albert, 77550 MOISSY-CRAMAYEL (FR); BECOULET, Julien, Fabien, Patrick, 77550 MOISSY-CRAMAYEL (FR)
(74) Mandataire: Cabinet Beau de Loménie
(86) Numéro de dépôt international: PCT/FR2021/050521
(87) Numéro de publication internationale: WO 2021/191569

(56) Documents cités:
- EP-A2- 1 921 290
- EP-B1- 1 921 290
- US-A- 4 251 987
- US-A1- 2007 087 892
- US-B1- 6 223 616

## Description

### Domaine technique

Le présent exposé concerne le domaine des aéronefs, et plus particulièrement une turbomachine pouvant être utilisée pour la propulsion aéronautique.

### Technique antérieure

Les turbomachines utilisées pour la propulsion des aéronefs, par exemple les turboréacteurs, comprennent généralement un carter dans lequel sont logés une soufflante fournissant l'essentiel de la poussée, un compresseur et une turbine. Le compresseur fournit de l'air comprimé à une chambre de combustion et les gaz de combustion produits dans ladite chambre mettent en mouvement la turbine, qui entraîne à son tour la soufflante.

Pour maximiser le rendement de la turbine, il est souhaitable qu'elle tourne le plus vite possible. Inversement, la vitesse de la soufflante est limitée par la vitesse de rotation en tête de pale, qui doit le plus souvent rester inférieure à la vitesse du son.

Pour pallier ce problème, on connaît des turbomachines munies d'un réducteur placé dans la chaîne de transmission entre la turbine et la soufflante, comme l'illustrent par exemple les documents US 4,251,987 et US 2007/087892. Un réducteur permet de faire tourner la turbine et la soufflante à des vitesses différentes.

Il existe néanmoins encore un besoin d'amélioration pour des turbomachines pour aéronef.

### Exposé de l'invention

A cet effet, le présent exposé concerne une turbomachine pour aéronef selon la revendication 1, la turbomachine comprenant un carter, une soufflante, un compresseur et une turbine, et un train épicycloïdal comprenant une entrée entraînée en rotation par la turbine, un premier étage de sortie configuré pour entraîner en rotation le compresseur et un deuxième étage de sortie couplé au premier étage de sortie et configuré pour entraîner en rotation la soufflante, le compresseur étant entraîné en rotation par la couronne du premier étage de sortie.

Le carter désigne une partie globalement fixe de la turbomachine, la soufflante, le compresseur et la turbine comprenant des roues aubagées configurées pour tourner par rapport au carter. Le carter comprend un carter d'entrée entre la soufflante et le compresseur.

Dans le présent exposé, on appelle axe de la turbomachine, son axe de symétrie ou quasi-symétrie, qui forme l'axe de rotation au moins de la turbine, et généralement aussi du compresseur et de la soufflante. La direction axiale correspond à la direction de l'axe de la turbomachine et une direction radiale est une direction perpendiculaire à cet axe et coupant cet axe. De même, un plan axial est un plan contenant l'axe de la turbomachine et un plan radial est un plan perpendiculaire à cet axe. Une circonférence s'entend comme un cercle appartenant à un plan radial et dont le centre appartient à l'axe de la turbomachine. Une direction tangentielle ou circonférentielle est une direction tangente à une circonférence ; elle est perpendiculaire à l'axe de la turbomachine mais ne passe pas par l'axe.

Sauf précision contraire, les adjectifs avant et arrière sont utilisés en référence à la direction axiale étant entendu que l'entrée de la turbomachine est située du côté avant de la turbomachine, tandis que sa sortie est située du côté arrière. Les adjectifs amont et aval sont utilisés en référence au sens d'écoulement normal des gaz dans la turbomachine.

Enfin, sauf précision contraire, les adjectifs intérieur (interne) et extérieur (externe) sont utilisés en référence à une direction radiale de sorte que la partie intérieure d'un élément est, suivant une direction radiale, plus proche de l'axe de la turbomachine que la partie extérieure du même élément.

Un train épicycloïdal comprend un planétaire intérieur, aussi connu sous le nom de pignon central ou soleil et appelé simplement « planétaire » par la suite, un ou plusieurs satellites en révolution autour du planétaire et une couronne, parfois appelée planétaire extérieur, entourant le ou les satellites. Par la suite, sans perte de généralité, on parlera indifféremment d'un ou plusieurs satellites. Les satellites peuvent être montés rotatifs sur un porte-satellite, le porte-satellite étant configuré pour synchroniser la révolution des différents satellites par rapport au planétaire ou à la couronne.

Sauf mention contraire explicite ou ressortant du contexte, par la suite, les références aux rayons et diamètres des roues s'entendent comme des références aux rayons et diamètres primitifs, respectivement. Le cercle primitif est tel que les cercles primitifs de deux roues engrenées ont la même vitesse tangentielle.

La liaison mécanique entre les composants du train épicycloïdal (planétaire, satellites, porte-satellite, couronne) et les organes de la turbomachine (soufflante, compresseur, turbine) peut être assurée au moyen d'arbres solidaires en rotation desdits organes.

Grâce au fait que la soufflante et le compresseur sont entraînés en rotation par deux sorties différentes du train épicycloïdal, il est possible de faire tourner non seulement la soufflante et la turbine, mais aussi le compresseur et la turbine, à des vitesses différentes. Plusieurs facteurs imposent d'augmenter le rayon du compresseur : l'intégration du train épicycloïdal, prévu pour la soufflante, à proximité du compresseur, mais aussi des contraintes d'aérodynamique de veine et l'intégration d'autres éléments de la turbomachine tels que paliers, arbres, tourillons et ventilation. Ce faisant, la vitesse de rotation du compresseur doit être réduite pour éviter que la vitesse tangentielle en tête de pale du compresseur ne dépasse les limites applicables. L'utilisation de deux sorties différentes permet donc de limiter le régime du compresseur tout en ayant un régime le plus élevé possible pour la turbine et un régime relativement faible pour la soufflante, en vue par exemple d'augmenter le rayon de la soufflante.

Le deuxième étage de sortie est couplé au premier étage de sortie, ce qui signifie qu'il existe une connexion fonctionnelle entre le premier étage de sortie et le deuxième étage de sortie, permettant la transmission d'un couple entre ces deux étages de sortie. Grâce au fait que le train épicycloïdal est un train épicycloïdal multi-étages comprenant au moins un premier étage de sortie et un deuxième étage de sortie couplés l'un à l'autre, la turbomachine peut conserver une bonne compacité malgré un rapport de réduction turbine-soufflante potentiellement très élevé (typiquement supérieur à 5). Par comparaison, un train épicycloïdal à simple étage ayant un rapport de réduction comparable serait radialement encombrant et imposerait soit de prévoir un déport radialement vers l'extérieur, parfois appelé « col de cygne », et un allongement axial de la turbomachine, soit de placer le compresseur à rayon plus élevé et donc de limiter sa vitesse, ce qui affecte son rendement.

Enfin, grâce au fait que le compresseur est entraîné en rotation par la couronne du premier étage de sortie, on peut obtenir un rapport de réduction entre le compresseur et la turbine proportionnel au rapport des rayons du planétaire et de la couronne du premier étage de sortie, tout en conservant une sortie plus lente sur la couronne du deuxième étage. Par différence, si le compresseur était entraîné par le planétaire du premier étage de sortie, l'entrée entraînée par la turbine devrait être le planétaire intérieur du deuxième étage. Le deuxième étage de sortie entraînant la soufflante en rotation, cette configuration ne laisserait plus qu'un seul étage pour effectuer le rapport de réduction entre la soufflante et la turbine : cela ramènerait donc l'architecture aux problèmes d'encombrement exposés plus haut. De plus, le fait de ne pas utiliser les planétaires internes de tous les étages facilite l'intégration de butées internes au train épicycloïdal afin de reprendre les efforts internes lorsqu'on utilise des dentures chevrons.

Ensemble, ces caractéristiques améliorent l'intégration du compresseur et le rendement global de la turbomachine.

Dans certains modes de réalisation, la soufflante est entraînée en rotation par la couronne du deuxième étage de sortie. Ainsi, on tire parti des deux étages du train épicycloïdal afin d'obtenir des rapports de réduction relativement élevés avec un encombrement radial raisonnable.

Dans certains modes de réalisation, le train épicycloïdal comprend au moins un satellite comprenant une première roue et une deuxième roue solidaires en rotation l'une de l'autre, la première roue appartenant au premier étage de sortie et s'engrenant avec la couronne du premier étage de sortie et la deuxième roue appartenant au deuxième étage de sortie. La première roue et la deuxième roue peuvent appartenir à une même pièce formant le satellite.

Le cas échéant, la deuxième roue peut s'engrener avec la couronne du deuxième étage de sortie.

Dans certains modes de réalisation, le rapport entre le diamètre de la première roue de sortie et le diamètre de la deuxième roue de sortie est compris entre 0,5 et 10.

Dans certains modes de réalisation, le train épicycloïdal comprend un porte-satellite fixe par rapport au carter. Le porte-satellite étant fixe, la couronne de chaque étage de sortie et le planétaire sont entraînés en rotation.

Ainsi, dans certains modes de réalisation, l'entrée du train épicycloïdal comprend un planétaire du train épicycloïdal. En d'autres termes, la turbine est configurée pour entraîner en rotation le planétaire du train épicycloïdal. Ce choix permet d'obtenir une réduction de vitesse de rotation tout en limitant la complexité et l'encombrement.

Dans certains modes de réalisation, le compresseur est soutenu par rapport au carter par au moins un palier. Par exemple, le palier peut être un roulement à billes ou un palier à rouleaux. Il peut en outre être prévu plusieurs paliers, au moins l'un, plusieurs ou tous les paliers étant agencés entre le compresseur et le carter.

Dans certains modes de réalisation, la turbomachine comprend en outre un palier agencé entre un arbre du compresseur et un arbre de la turbine. Un tel palier, installé entre deux parties tournantes, est généralement appelé palier interarbre. Par exemple, le palier interarbre peut être un palier à rouleaux. Il peut en outre être prévu plusieurs paliers, au moins l'un, plusieurs ou tous les paliers étant agencés entre un arbre du compresseur et un arbre de la turbine. Un palier interarbre ainsi agencé permet de limiter l'encombrement des parties statoriques sous le compresseur.

Dans certains modes de réalisation, trois éléments parmi un arbre de soufflante, un arbre de compresseur, un arbre de turbine et le carter comprennent une portion localement plus souple apte à accommoder des déplacements axiaux desdits éléments. La portion est dite localement plus souple au sens où elle présente localement une rigidité moindre que les portions environnantes. Ladite portion forme donc une zone de déformation préférentielle et facilitée pour accommoder les déplacements. En effet, le train épicycloïdal étant hyperstatique, les déplacements relatifs de l'entrée et des étages de sortie, notamment dans la direction axiale, ont tendance à provoquer des surcharges dans les composants du train épicycloïdal. Les portions localement plus souples respectives permettent de diminuer, sinon d'éviter ces surcharges. Le quatrième élément parmi les éléments précités peut être relativement plus rigide que les portions localement plus souples. Le composant du train épicycloïdal couplé à cet élément est dit « maître » dans la mesure où il impose ses déplacements aux autres composants du train épicycloïdal, dits « esclaves » et qui, par le biais des portions localement plus souples, n'entraînent pas de déplacement des organes de turbomachine correspondants.

Dans certains modes de réalisation, ladite portion présente des méandres en section axiale. La section axiale est une section dans un plan axial tel que défini précédemment. Les méandres définissent une forme non purement axiale, par exemple ayant une composante radiale non nulle. Les méandres peuvent comprendre des sinuosités, des formes en ligne brisée, en zigzag, en chicane, etc.

Dans certains modes de réalisation, ladite soufflante est l'unique soufflante de la turbomachine. La turbomachine ne comprend donc pas d'autre soufflante.

Dans certains modes de réalisation, ledit compresseur est un compresseur basse-pression et la turbomachine comprend en outre un compresseur haute-pression en aval du compresseur basse-pression, le carter comprenant un carter inter-compresseurs entre le compresseur basse-pression et le compresseur haute-pression.

Dans certains modes de réalisation, un arbre de soufflante est soutenu par rapport au carter d'entrée par au moins un palier. Optionnellement, l'arbre de soufflante est soutenu par rapport au carter d'entrée par au moins deux paliers. Optionnellement, ces deux paliers comprennent au moins un palier à billes et au moins un palier à rouleaux.

Par ailleurs, le présent exposé concerne également une turbomachine pour aéronef, comprenant un carter, une soufflante, un compresseur et une turbine, et un train épicycloïdal comprenant une entrée entraînée en rotation par la turbine, un premier étage de sortie et un deuxième étage de sortie couplé au premier étage de sortie, dans lequel la turbine est configurée pour entraîner en rotation un planétaire du premier étage de sortie, la soufflante est entraînée en rotation par la couronne du deuxième étage de sortie, et le compresseur est entraîné en rotation par la couronne du premier étage de sortie ou par le planétaire du deuxième étage de sortie.

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] La figure 1 est une vue d'ensemble schématique d'une turbomachine selon un mode de réalisation.
[Fig. 2] La figure 2 est un schéma d'un train épicycloïdal selon un mode de réalisation.
[Fig. 3] La figure 3 est une partie d'une coupe longitudinale de la turbomachine selon un premier mode de réalisation.
[Fig. 4] La figure 4 est une partie d'une coupe longitudinale de la turbomachine selon un deuxième mode de réalisation.
[Fig. 5] La figure 5 est une vue en coupe longitudinale et en perspective d'une partie de la turbomachine selon le deuxième mode de réalisation.
[Fig. 6] La figure 6 est une partie d'une coupe longitudinale de la turbomachine selon un troisième mode de réalisation.
[Fig. 7] La figure 7 est une partie d'une coupe longitudinale de la turbomachine selon un quatrième mode de réalisation.

### Description détaillée

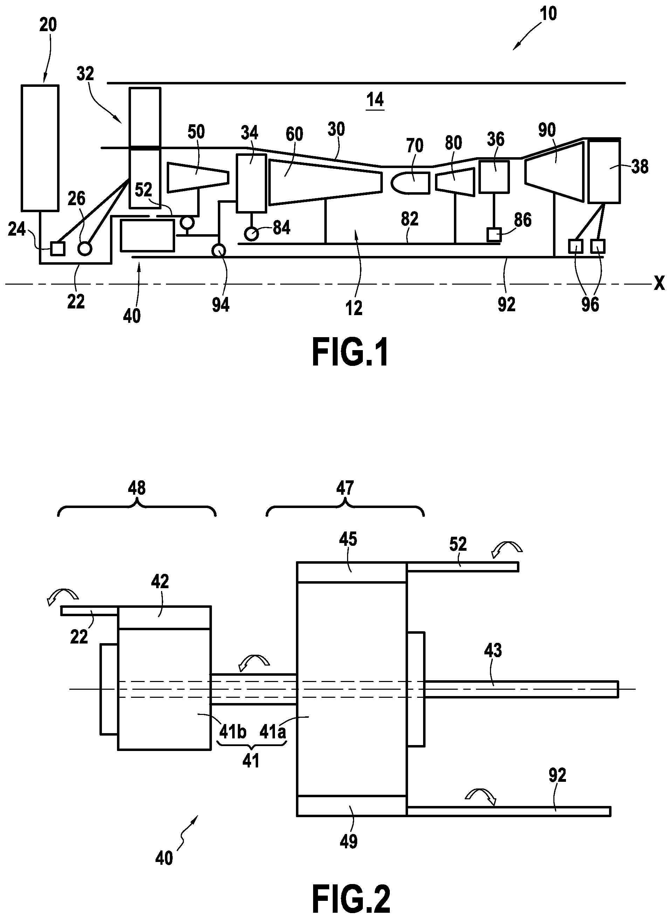

Une turbomachine 10 pour aéronef selon un mode de réalisation est représentée schématiquement sur la figure 1, en demi-coupe longitudinale. En l'occurrence, la turbomachine 10 est un turboréacteur à double corps et double flux. En effet, la turbomachine 10 comprend une soufflante 20, de préférence unique, un carter interne 30 disposé en aval de la soufflante 20 et séparant une veine primaire 12 d'une veine secondaire 14. Un compresseur basse pression (compresseur BP) 50, un compresseur haute pression (compresseur HP) 60, une chambre de combustion 70, une turbine haute pression (turbine HP) 80 et une turbine basse pression (turbine BP) 90 sont agencés dans la veine primaire 12, de l'amont vers l'aval. Du fait que la turbomachine 10 est à double corps, elle comporte deux ensemble tournants cinématiquement indépendants, à savoir d'une part un corps haute pression (corps HP), comprenant le compresseur HP 60 et la turbine HP 80, et d'autre part un corps basse pression (corps BP) comprenant le compresseur BP 50 et la turbine BP 80. Chaque compresseur 50, 60 est entraîné directement ou indirectement par la turbine 80, 90 du corps correspondant, les turbines 80, 90 étant mises en mouvement par les gaz de combustion issus de la chambre de combustion 70.

Toutefois, le présent exposé est transposable au cas d'une turbomachine à simple corps. L'unique corps aurait la fonction du corps HP pour le fonctionnement de la turbomachine, mais son rôle par rapport au train épicycloïdal décrit ci-après serait celui du corps BP.

Le carter de la turbomachine comprend en outre, dans ce mode de réalisation, un carter d'entrée 32 entre la soufflante 20 et le compresseur BP 50, un carter inter-compresseurs 34 entre le compresseur BP 50 et le compresseur HP 60, un carter inter-turbines 36 entre la turbine HP 80 et la turbine BP 90, et un carter arrière de turbine 38 (de l'anglais *turbine rear frame*) en aval de la turbine BP 90. Les éléments de carter sont fixes dans le référentiel de l'avion, et les parties tournantes, à savoir les roues aubagées mobiles de la soufflante 20, des compresseurs 50, 60 et des turbines 80, 90, tournent par rapport au carter.

La rotation de la turbine HP 80 entraîne le compresseur HP 60 via un arbre HP 82. Le compresseur HP 60 et la turbine HP 80 sont donc cinématiquement dépendants l'un de l'autre et, en particulier ici, tournent à la même vitesse. L'arbre HP 82 peut être soutenu par rapport au carter par au moins un palier, en l'occurrence un premier palier 84, typiquement un roulement à billes, par rapport au carter inter-compresseurs 34 et un deuxième palier 86, typiquement un palier à rouleaux, par rapport au carter inter-turbines 36.

Par ailleurs, dans ce mode de réalisation, la turbine BP 90 entraîne en rotation le compresseur BP 50. La turbine BP 90 entraîne également en rotation la soufflante 20. Plus précisément, la turbomachine 10 comprend une transmission, ici un train épicycloïdal 40, couplée à la turbine BP 90 via un arbre de turbine BP 92. Dans ce mode de réalisation, l'arbre de turbine BP 92 est agencé coaxialement à l'intérieur de l'arbre HP 82. Des paliers 94, 96 peuvent être prévus pour soutenir l'arbre de turbine BP 92.

Par ailleurs, comme illustré sur la figure 1, le train épicycloïdal 40 est couplé en outre à la soufflante 20 et au compresseur BP 50 afin de modifier le rapport de transmission de vitesse de rotation entre la turbine BP 90 et d'une part la soufflante 20, d'autre part le compresseur BP 50. Le train épicycloïdal 40 forme donc un réducteur entre la turbine BP 90 et d'une part la soufflante 20, d'autre part le compresseur BP 50.

En d'autres termes, comme illustré sur la figure 1, le train épicycloïdal 40 comprend une entrée entraînée en rotation par la turbine BP 90, un premier étage de sortie configuré pour entraîner en rotation le compresseur BP 50 et un deuxième étage de sortie couplé au premier étage de sortie et configuré pour entraîner en rotation la soufflante 20.

La structure du train épicycloïdal 40 est représentée en détail sur le schéma de la figure 2.

Le train épicycloïdal 40 comprend un planétaire 49. Dans ce mode de réalisation, le planétaire 49 est entraîné en rotation par la turbine BP 90. Plus précisément, le planétaire 49 peut être entraîné en rotation, voire solidaire en rotation, de l'arbre de turbine BP 92. Ainsi, dans ce mode de réalisation, l'entrée du train épicycloïdal 40 comprend le planétaire 49.

Le planétaire 49 s'engrène avec au moins un satellite 41. Le satellite 41 tourne sur lui-même. Le satellite 41 suit un mouvement de révolution autour du planétaire 49 mais, le planétaire 49 tournant lui-même, le satellite 41 peut avoir un axe de rotation fixe dans le référentiel de la turbomachine 10, comme cela sera illustré par la suite.

Le satellite 41 comprend une première roue 41a et une deuxième roue 41b. La première roue 41a et la deuxième roue 41b sont couplées l'une à l'autre, et plus précisément ici solidaires en rotation l'une de l'autre. La première roue 41a appartient au premier étage de sortie 47 du train épicycloïdal 40. La deuxième roue 41b appartient au deuxième étage de sortie 48 du train épicycloïdal 40.

Le satellite 41 est monté rotatif sur un porte-satellite 43. Le porte-satellite 43 est ici fixe par rapport au carter 30, par exemple, comme schématisé sur la figure 1, fixé sur le carter inter-compresseurs 34.

Le train épicycloïdal 40 comprend par ailleurs deux couronnes 42, 45. La première couronne 45, ou couronne du premier étage de sortie 47, s'engrène avec le satellite 41, plus particulièrement sa première roue 41a. Par ailleurs, la première couronne 45 est configurée pour entraîner en rotation le compresseur BP 50. Plus précisément, la première couronne 45 peut entraîner en rotation, voire être solidaire en rotation d'un arbre de compresseur BP 52 lui-même solidaire en rotation du compresseur BP 50.

La deuxième couronne 42, ou couronne du deuxième étage de sortie 48, s'engrène avec le satellite 41, plus particulièrement sa deuxième roue 41b. Par ailleurs, la deuxième couronne 42 est configurée pour entraîner en rotation la soufflante 20. Plus précisément, la deuxième couronne 42 peut entraîner en rotation, voire être solidaire en rotation d'un arbre de soufflante 22 lui-même solidaire en rotation de la soufflante 20.

L'arbre de soufflante 22 peut être soutenu par rapport au carter 30, notamment par rapport au carter d'entrée 32, par au moins un palier. En l'espèce, comme illustré sur la figure 1, l'au moins un palier peut comprendre au moins deux paliers, à savoir au moins un palier à rouleaux 24 et au moins un roulement à billes 26.

Le porte-satellite 43 étant fixe par rapport au carter, la rotation du planétaire 49 se transmet aux couronnes 42, 45 via le satellite 41.

Ainsi, en fonctionnement, la rotation de la turbine BP 90 est transmise, via l'arbre de turbine BP 92, au planétaire 49. La rotation du planétaire 49 entraîne en rotation le satellite 41. Le premier étage de sortie 47 entraîne en rotation le compresseur BP 50 via la première roue 41a, la première couronne 45 et l'arbre de compresseur BP 52. Le deuxième étage de sortie 48 entraîne en rotation la soufflante 20 via la deuxième roue 41b, la deuxième couronne 42 et l'arbre de soufflante 20.

En notant Rᵢ le rayon fonctionnel d'un composant i par rapport à son axe de rotation (par exemple R₄₂ pour le rayon interne de la deuxième couronne 42) et Ωᵢ la vitesse de rotation du composant i, on a les relations R₄₉Ω₄₉ =R₄₁ₐΩ₄₁, R₄₁ₐΩ₄₁ =R₄₅ Ω₄₅, et R_{41b} Ω₄₁ =R₄₂ Ω₄₂, d'où l'on tire que la vitesse de rotation de la première couronne 45, et donc de l'arbre de compresseur BP 52, est égale à Ω₄₅ =(R₄₉/R₄₅)Ω₄₉, et que la vitesse de rotation de la deuxième couronne 42, et donc de l'arbre de soufflante 22, est égale à Ω₄₂ =(R₄₉/R₄₁ₐ)(R_{41b}/R₄₂)Ω₄₉.

Pour le dimensionnement des vitesses relatives de la soufflante 20 et du compresseur BP, le satellite 41 peut être conçu de sorte que le rapport entre le diamètre de la première roue de sortie et le diamètre de la deuxième roue de sortie soit compris entre 0,5 et 10.

La configuration du train épicycloïdal 40 étant donnée comme ci-dessus, sa réalisation détaillée peut être conçue par l'homme du métier selon ses connaissances générales.

En outre, bien qu'on ait décrit ici un train épicycloïdal 40 dont le planétaire 49 forme l'entrée et les couronnes 42, 45 forment les sorties, il est possible de choisir autrement les composants du train épicycloïdal 40 formant l'entrée et les sorties, par exemple selon les rapports de réduction de vitesse souhaités. Ces changements peuvent être réalisés quitte, éventuellement, à ajouter une roue supplémentaire au satellite 41 pour offrir davantage de liberté de conception.

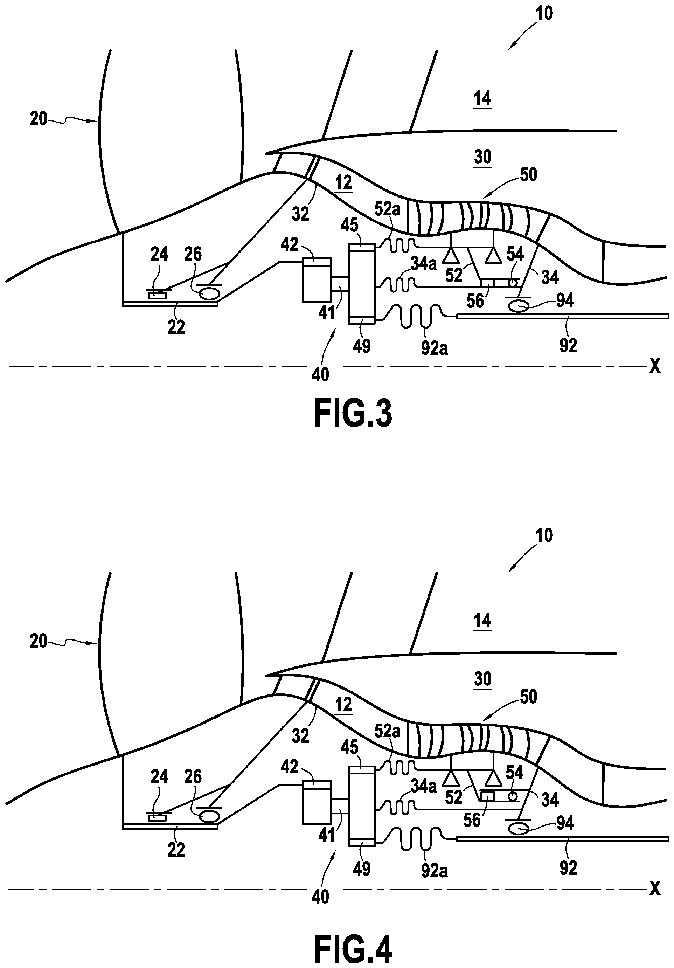

L'intégration pratique du train épicycloïdal 40 dans une turbomachine est illustrée, selon un premier mode de réalisation, sur la figure 3. La présence du train épicycloïdal 40 et d'arbre distincts pour la turbine BP 90 et le compresseur BP 50 impose en effet de revoir l'architecture de la turbomachine, en particulier l'emplacement des paliers.

Ainsi, dans ce premier mode de réalisation, la turbomachine 10 comprend au moins un palier configuré pour soutenir le compresseur BP 50 par rapport au carter 30. En l'occurrence, deux paliers 54, 56 sont prévus. Les paliers 54, 56 sont ici agencés entre le carter inter-compresseurs 34 et l'arbre de compresseur BP 52. Plus précisément, les paliers 54, 56 sont agencés sur la partie du carter 30 sur laquelle est fixée le porte-satellite 43.

Dans ce mode de réalisation, le palier 54 (troisième palier) peut-être un roulement à billes, tandis que le palier 56 (quatrième palier) peut-être un palier à rouleaux. Toutefois, les paliers 54, 56 peuvent être interchangés et/ou être d'un autre type, même s'il est souhaitable qu'au maximum l'un des paliers soit un roulement à billes, de façon à éviter un montage hyperstatique des paliers.

La présence de deux paliers assure le maintien et empêche le rotulage du compresseur BP 50, c'est-à-dire le risque qu'un palier unique se comporte comme une liaison rotule en cas de charge radiale désaxée trop importante, ce qui aurait pour conséquence de ne plus assurer la coaxialité du rotor de compresseur BP 50 avec son stator, et donc de l'endommager.

Par ailleurs, pour éviter un montage hyperstatique du train épicycloïdal 40, on peut prévoir que trois éléments parmi l'arbre de soufflante 22, l'arbre de compresseur BP 52, l'arbre de turbine BP 92 et le carter 30 (en l'espèce le carter inter-compresseurs 34) comprennent une portion localement plus souple apte à accommoder des déplacements axiaux desdits éléments. En l'occurrence, l'arbre de soufflante 22 est conçu relativement rigide ou raide, tandis que des portions localement souples 34a, 52a, 92a sont prévues respectivement sur le carter inter-compresseurs 34, l'arbre de compresseur BP 52 et l'arbre de turbine BP 92.

Comme illustré sur la figure 3, lesdites portions localement souples sont prévues sur les arbres entre le train épicycloïdal 40 et les paliers soutenant les organes de la turbomachine correspondants, par exemple les paliers 54, 56. Ainsi, les déplacements axiaux et/ou radiaux relatifs au sein du train épicycloïdal 40, voire les déplacements axiaux et/ou radiaux de l'arbre de soufflante 22, sont absorbés par les portions localement souples 34a, 52a, 92a et ne perturbent pas le fonctionnement des paliers ni, plus généralement, la dynamique de la turbomachine 10.

Dans ce mode de réalisation, au moins une desdites portions localement souples 34a, 52a, 92a, ici toutes, présentent des méandres en section axiale. Les méandres sont ici formés par une succession axiale de sections radialement croissantes et décroissantes. Les méandres apportent de la souplesse sans compromettre la tenue mécanique de la turbomachine 10.

Lorsqu'un élément est soutenu à la fois par un roulement à billes et par un palier à rouleaux, il est possible de prévoir, comme l'illustre la figure 1, que le roulement à billes soit plus proche du train épicycloïdal 40 que le palier à rouleaux, afin de minimiser les jeux axiaux à l'intérieur du train épicycloïdal 40. Cette propriété peut être prévue indépendamment pour chaque élément. Il s'ensuit un support optimisé du train épicycloïdal.

Les figures 4 à 7 présentent la turbomachine dans d'autres modes de réalisation. Sur ces figures, les éléments correspondant ou identiques à ceux du premier mode de réalisation recevront le même signe de référence et ne seront pas décrits à nouveau.

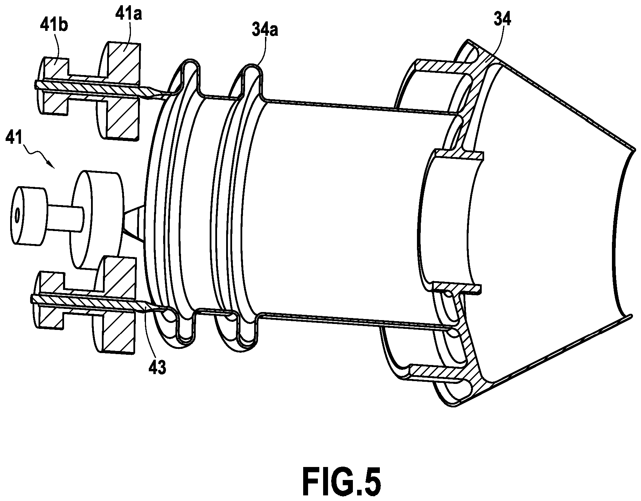

Dans le deuxième mode de réalisation, illustré sur les figures 4 et 5, qui présente une variante du premier mode de réalisation, les paliers 54, 56 sont agencés entre l'arbre de compresseur BP 52 et une partie du carter inter-compresseurs 34 indépendante de la partie sur laquelle est fixé le porte-satellite 43. Cette configuration permet de refermer les jeux des paliers 54, 56, et plus particulièrement du roulement à billes 54 : en effet, le rotor est situé radialement à l'intérieur du stator. Sous effort centrifuge, le jeu rotor/stator se referme.

La figure 5 illustre plus particulièrement l'agencement des satellites 41, ici au nombre de quatre (dont trois sont visibles sur la figure), sur le porte-satellites 43 et le maintien du porte-satellites 43 par rapport au carter inter-compresseurs 34. Sur la vue représentée, le carter inter-compresseurs 34 et le porte-satellites 43 sont venus de matière, mais en alternative, il est possible de prévoir une fixation entre le carter inter-compresseurs 34 et le porte-satellite 43, par exemple pour faciliter le montage du train épicycloïdal 40.

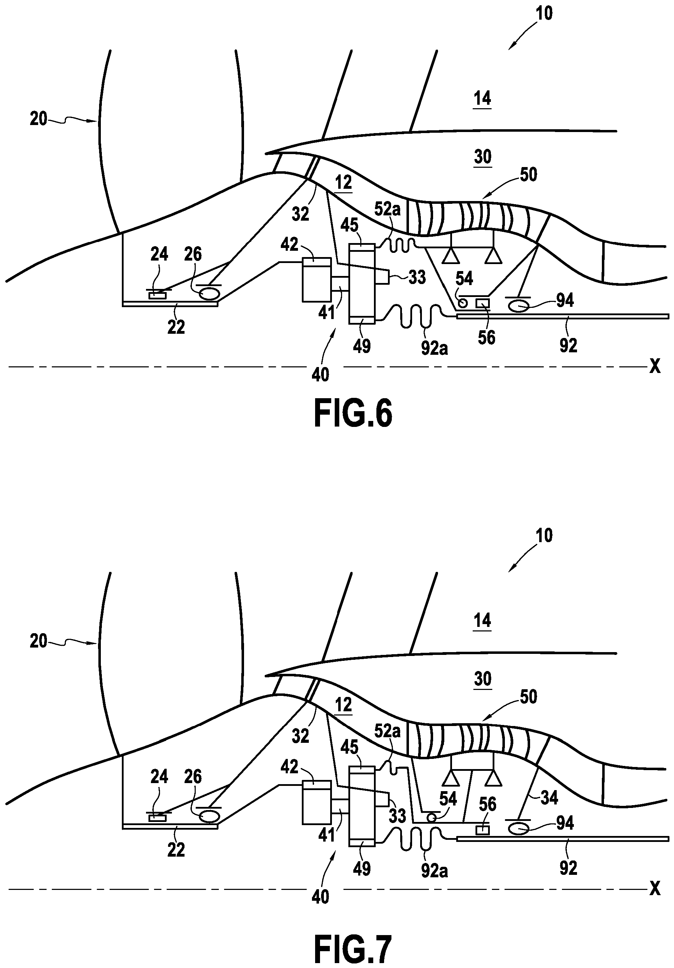

Dans le troisième mode de réalisation, illustré sur la figure 6, les paliers 54, 56 sont agencés entre l'arbre de compresseur BP 52 et le carter inter-compresseurs 34. Toutefois, le porte-satellite 43 est quant à lui fixé non sur le carter inter-compresseurs 34, mais sur le carter d'entrée 32. Pour ce faire, par exemple, le support du porte-satellites 43 passe entre deux satellites 41 consécutifs. Cela libère de la place pour positionner les paliers 54, 56 plus près de l'axe de rotation X, ce qui les sollicite moins mécaniquement. De plus, cela permet de libérer de l'espace sous le compresseur BP 50, ce qui facilite l'intégration sous le compresseur BP 50 et permet d'abaisser les alésages, réduisant ainsi la masse des disques.

En outre, le carter d'entrée 32 étant positionné vers l'avant par rapport au porte-satellite 43, la jonction entre le porte-satellite 43 et le carter d'entrée 32 forme, comme illustré sur la figure 6, un coude de retour 33. Le coude de retour peut présenter une portion s'étendant axialement vers l'avant et radialement vers l'extérieur. Le coude de retour 33 peut former une partie localement plus souple apte à accommoder des déplacements axiaux du train épicycloïdal 40 par rapport au carter d'entrée 32. En outre, le fait que le la pièce liant le porte-satellites 43 au carter d'entrée 32 soit ajourée au niveau des satellites 41 permet d'accommoder des déplacements radiaux du train épicycloïdal 40 par rapport au carter d'entrée 32. Ainsi, dans ces modes de réalisation, le carter 30 peut être dépourvu de méandres. Cela permet de réduire la longueur et l'encombrement du moteur.

Dans le quatrième mode de réalisation, illustré sur la figure 7, qui présente une variante du troisième mode de réalisation, le troisième palier 54 soutient le compresseur BP 50 par rapport au carter 30, ici par rapport au carter d'entrée 32. Le quatrième palier 56, en l'espèce le palier à rouleaux, est agencé entre l'arbre du compresseur BP 52 et l'arbre de turbine BP 92. Le quatrième palier 56 forme donc un palier interarbre. Comme indiqué précédemment, l'intégration d'un palier interarbre permet de limiter l'encombrement de pièces de stator sous le compresseur BP 50.

Dans l'ensemble du présent exposé, lorsqu'il est question d'entraînement, cet entraînement peut être direct, c'est-à-dire en particulier sans étage de transmission intermédiaire.

Bien que la présente description se réfère à des exemples de réalisation spécifiques, des modifications peuvent être apportées à ces exemples sans sortir de la portée générale de l'invention telle que définie par les revendications. Par conséquent, la description et les dessins doivent être considérés dans un sens illustratif plutôt que restrictif.

## Revendications

1. Turbomachine (10) pour aéronef, comprenant un carter (30), une soufflante (20), un compresseur (50), une turbine (90), le carter (30) comprenant un carter d'entrée (32) entre la soufflante (20) et le compresseur (50), la turbomachine (10) comprenant en outre un train épicycloïdal (40) comprenant une entrée entraînée en rotation par la turbine (90), un premier étage de sortie (47) configuré pour entraîner en rotation le compresseur (50) et un deuxième étage de sortie (48) couplé au premier étage de sortie (47) et configuré pour entraîner en rotation la soufflante (20);
**caractérisée en ce que** le compresseur est entraîné en rotation par une première couronne (45), la première couronne (45) étant la couronne du premier étage de sortie (47).

2. Turbomachine selon la revendication 1, dans laquelle la soufflante (20) est entraînée en rotation par une deuxième couronne (42), la deuxième couronne (42) étant la couronne du deuxième étage de sortie (48).

3. Turbomachine selon la revendication 1 ou 2, dans laquelle le train épicycloïdal (40) comprend au moins un satellite (41) comprenant une première roue (41a) et une deuxième roue (41b) solidaires en rotation l'une de l'autre, la première roue (41a) appartenant au premier étage de sortie (47) et s'engrenant avec la couronne (45) du premier étage de sortie (47) et la deuxième roue (41b) appartenant au deuxième étage de sortie (48).

4. Turbomachine selon la revendication 3, dans laquelle le rapport entre le diamètre de la première roue de sortie (41a) et le diamètre de la deuxième roue de sortie (41b) est compris entre 0,5 et 10.

5. Turbomachine selon l'une quelconque des revendications 1 à 4, dans laquelle le train épicycloïdal (40) comprend un porte-satellite (43) fixe par rapport au carter (30).

6. Turbomachine selon l'une quelconque des revendications 1 à 5, dans laquelle l'entrée comprend un planétaire (49) du train épicycloïdal (40).

7. Turbomachine selon l'une quelconque des revendications 1 à 6, dans laquelle le compresseur (50) est soutenu par rapport au carter par au moins un palier (54).

8. Turbomachine selon l'une quelconque des revendications 1 à 7, comprenant en outre un palier (56) agencé entre un arbre (52) du compresseur (50) et un arbre (92) de la turbine (90).

9. Turbomachine selon l'une quelconque des revendications 1 à 8, dans lequel trois éléments parmi un arbre de soufflante (22), un arbre de compresseur (52), un arbre de turbine (92) et le carter (30) comprennent une portion localement plus souple (34a, 52a, 92a) apte à accommoder des déplacements axiaux desdits éléments.

10. Turbomachine selon la revendication 9, dans laquelle ladite portion (34a, 52a, 92a) présente des méandres en section axiale.

11. Turbomachine selon l'une quelconque des revendications 1 à 10, dans laquelle ladite soufflante (20) est l'unique soufflante de la turbomachine.

12. Turbomachine selon l'une quelconque des revendications 1 à 11, dans laquelle ledit compresseur (50) est un compresseur basse-pression et la turbomachine comprend en outre un compresseur haute-pression (60) en aval du compresseur basse-pression (50), le carter (30) comprenant un carter inter-compresseurs (34) entre le compresseur basse-pression (50) et le compresseur haute-pression (60).

13. Turbomachine selon l'une quelconque des revendications 1 à 12, dans laquelle un arbre de soufflante (22) est soutenu par rapport au carter d'entrée (32) par au moins un palier, de préférence au moins deux paliers, de préférence encore au moins un palier à billes et un palier à rouleaux.

## Patentansprüche

1. Turbomaschine (10) für ein Flugzeug, umfassend ein Gehäuse (30), ein Gebläse (20), einen Verdichter (50), eine Turbine (90), wobei das Gehäuse (30) ein Einlassgehäuse (32) zwischen dem Gebläse (20) und dem Verdichter (50) umfasst, wobei die Turbomaschine (10) ferner ein Planetengetriebe (40) umfasst, das einen von der Turbine (90) rotatorisch angetriebenen Einlass, eine erste Ausgangsstufe (47), die ausgelegt ist, um den Verdichter (50) rotatorisch anzutreiben, und eine zweite Ausgangsstufe (48), die mit der ersten Ausgangsstufe (47) gekoppelt ist und ausgelegt ist, um das Gebläse (20) rotatorisch anzutreiben, umfasst;
**dadurch gekennzeichnet, dass** der Verdichter (50) durch einen ersten Kranz (45) rotatorisch angetrieben wird, wobei der erste Kranz (45) der Kranz der ersten Ausgangsstufe (47) ist.

2. Turbomaschine nach Anspruch 1, wobei das Gebläse (20) durch einen zweiten Kranz (42) rotatorisch angetrieben wird, wobei der zweite Kranz (42) der Kranz der zweiten Ausgangsstufe (48) ist.

3. Turbomaschine nach Anspruch 1 oder 2, wobei das Planetengetriebe (40) mindestens ein Satellitenrad (41) umfasst, das ein erstes Rad (41a) und ein zweites Rad (41b) umfasst, die rotatorisch fest miteinander verbunden sind, wobei das erste Rad (41a) zur ersten Ausgangsstufe (47) gehört und in den Kranz (45) der ersten Ausgangsstufe (47) eingreift und das zweite Rad (41b) zur zweiten Ausgangsstufe (48) gehört.

4. Turbomaschine nach Anspruch 3, wobei das Verhältnis zwischen dem Durchmesser des ersten Ausgangsrads (41a) und dem Durchmesser des zweiten Ausgangsrads (41b) zwischen 0,5 und 10 liegt.

5. Turbomaschine nach einem der Ansprüche 1 bis 4, wobei das Planetengetriebe (40) einen Satellitenträger (43) umfasst, der in Bezug auf das Gehäuse (30) feststehend ist.

6. Turbomaschine nach einem der Ansprüche 1 bis 5, wobei der Einlass ein Sonnenrad (49) des Planetengetriebes (40) umfasst.

7. Turbomaschine nach einem der Ansprüche 1 bis 6, wobei der Verdichter (50) in Bezug auf das Gehäuse durch mindestens ein Lager (54) gestützt wird.

8. Turbomaschine nach einem der Ansprüche 1 bis 7, ferner umfassend ein Lager (56), das zwischen einer Welle (52) des Verdichters (50) und einer Welle (92) der Turbine (90) eingerichtet ist.

9. Turbomaschine nach einem der Ansprüche 1 bis 8, wobei drei Elemente von einer Gebläsewelle (22), einer Verdichterwelle (52), einer Turbinenwelle (92) und dem Gehäuse (30) einen lokal elastischeren Abschnitt (34a, 52a, 92a) umfassen, der geeignet ist, axiale Verschiebungen der Elemente aufzunehmen.

10. Turbomaschine nach Anspruch 9, wobei der Abschnitt (34a, 52a, 92a) im axialen Querschnitt Mäander aufweist.

11. Turbomaschine nach einem der Ansprüche 1 bis 10, wobei das Gebläse (20) das einzige Gebläse der Turbomaschine ist.

12. Turbomaschine nach einem der Ansprüche 1 bis 11, wobei der Verdichter (50) ein Niederdruckverdichter ist und die Turbomaschine ferner einen Hochdruckverdichter (60) stromabwärts des Niederdruckverdichters (50) umfasst, wobei das Gehäuse (30) ein Zwischenverdichtergehäuse (34) zwischen dem Niederdruckverdichter (50) und dem Hochdruckverdichter (60) umfasst.

13. Turbomaschine nach einem der Ansprüche 1 bis 12, wobei eine Gebläsewelle (22) in Bezug auf das Einlassgehäuse (32) durch mindestens ein Lager, vorzugsweise mindestens zwei Lager, weiter vorzugsweise mindestens ein Kugellager und ein Rollenlager, gestützt wird.

## Claims

1. An aircraft turbomachine (10) comprising a casing (30), a fan (20), a compressor (50) and a turbine (90), the casing (30) comprising an inlet casing (32) between the fan (20) and the compressor (50), the turbomachine (10) further comprising an epicyclic gear train (40) comprising an input driven in rotation by the turbine (90), a first output stage (47) configured to drive in rotation the compressor (50) and a second output stage (48) coupled to the first output stage (47) and configured to drive in rotation the fan (20); **characterized in that** the compressor is driven in rotation by a first ring gear (45), the first ring gear (45) being the ring gear of the first output stage (47).

2. The turbomachine according to claim 1, wherein the fan (20) is driven in rotation by a second ring gear (42), the second ring gear (42) being the ring gear of the second output stage (48).

3. The turbomachine according to claim 1 or 2, wherein the epicyclic gear train (40) comprises at least one planet gear (41) comprising a first wheel (41a) and a second wheel (41b) secured in rotation to each other, the first wheel (41a) belonging to the first output stage (47) and meshing with the ring gear (45) of the first output stage (47) and the second wheel (41b) belonging to the second output stage (48).

4. The turbomachine according to claim 3, wherein the ratio between the diameter of the first output wheel (41a) and the diameter of the second output wheel (41b) is comprised between 0.5 and 10.

5. The turbomachine according to any one of claims 1 to 4, wherein the epicyclic gear train (40) comprises a planet carrier (43) fixed relative to the casing (30).

6. The turbomachine according to any one of claims 1 to 5, wherein the input comprises a sun gear (49) of the epicyclic gear train (40).

7. The turbomachine according to any one of claims 1 to 6, wherein the compressor (50) is supported relative to the casing by at least one bearing (54).

8. The turbomachine according to any one of claims 1 to 7, further comprising a bearing (56) arranged between a shaft (52) of the compressor (50) and a shaft (92) of the turbine (90).

9. The turbomachine according to any one of claims 1 to 8, wherein three elements among a fan shaft (22), a compressor shaft (52), a turbine shaft (92) and the casing (30) comprise a locally more flexible portion (34a, 52a, 92a) able to accommodate axial displacements of said elements.

10. The turbomachine according to claim 9, wherein said portion (34a, 52a, 92a) has meanders in axial section.

11. The turbomachine according to any one of claims 1 to 10, wherein said fan (20) is the only fan of the turbomachine.

12. The turbomachine according to any one of claims 1 to 11, wherein said compressor (50) is a low-pressure compressor and the turbomachine further comprises a high-pressure compressor (60) downstream of the low-pressure compressor (50), the casing (30) comprising an inter-compressor casing (34) between the low-pressure compressor (50) and the high-pressure compressor (60).

13. The turbomachine according to any one of claims 1 to 12, wherein a fan shaft (22) is supported relative to the inlet casing (32) by at least one bearing, preferably at least two bearings, more preferably at least one ball bearing and one roller bearing.
